# EUROPÄISCHE PATENTSCHRIFT

(11) **EP 1 858 740 B1**
(45) Veröffentlichungstag und Bekanntmachung des Hinweises auf die Patenterteilung: **02.06.2010**
(21) Anmeldenummer: 06707571.3
(22) Anmeldetag: 15.03.2006
(51) Int. Cl.: B60W 10/02, B60W 10/10

(54) **VERFAHREN UND VORRICHTUNG ZUR STEUERUNG EINES KRAFTFAHRZEUG-ANTRIEBSSTRANGES**
METHOD AND DEVICE FOR CONTROLLING A MOTOR VEHICLE DRIVE TRAIN
PROCEDE ET DISPOSITIF POUR COMMANDER UNE CHAINE CINEMATIQUE DE VEHICULE A MOTEUR

(30) Priorität: 17.03.2005 DE 102005012261
(43) Veröffentlichungstag der Anmeldung: 28.11.2007
(73) Patentinhaber: ZF Friedrichshafen AG, 88038 Friedrichshafen (DE)
(72) Erfinder: GANSOHR, Marcus, 88682 Salem (DE); SCHNEIDER, Florian, 88161 Lindenberg (DE); JÄGER, Thomas, 88074 Meckenbeuren (DE)
(86) Internationale Anmeldenummer: PCT/EP2006/002389
(87) Internationale Veröffentlichungsnummer: WO 2006/097297

(56) Entgegenhaltungen:
- DE-A1- 10 201 980
- DE-A1- 10 316 419
- US-A1- 2003 130 092
- US-A1- 2004 045 784
- US-A1- 2004 106 495

## Beschreibung

Die Erfindung betrifft ein Verfahren und eine Vorrichtung zur Steuerung eines Kraftfahrzeug-Antriebsstranges mit einem automatisierten Schaltgetriebe und einer automatisierten Anfahr- und Schaltkupplung gemäß dem Oberbegriff der unabhängigen Patentansprüche 1 und 7. Ein solches Verfahren ist aus US-A- 2003/0130092 bekannt.

Bekanntlich weist ein Antriebsstrang eines Kraftfahrzeuges zwischen einem Antriebsmotor und einem Schaltgetriebe eine Anfahr- und Schaltkupplung auf. Insbesondere bei Antriebssträngen mit automatisiert schaltbarem Getriebe ist üblicherweise auch die Anfahr- und Schaltkupplung automatisch betätigbar ausgebildet, so dass ein Fahrzeugführer von der Schalt- und Kupplungsbetätigung weitgehend entlastet ist. Zur Betätigung einer solchen Kupplung wird ein von einem Steuerungsgerät ansteuerbarer Aktuator genutzt, welcher in den meisten Anwendungsfällen druckmittelbetätigbar ausgebildet ist, aber auch elektrisch betätigbar ausgebildet sein kann.

Druckmittelbetätigbare Kupplungsaktuatoren bestehend im einfachsten Fall aus einem Zylinder, in dem ein Kolben axial verschiebbar gelagert ist. Der Kolben ist über eine Kolbenstange mit einem Kupplungselement verbunden, welches bei einer Axialverschiebung desselben die Reibbeläge der Kupplung gegen eine Federrückstellkraft auf Abstand hält oder zusammenführt, also die Kupplung schließt oder öffnet. Der Kupplungsaktuator ist dabei hinsichtlich seiner Axialbewegung nicht selbsthemmend ausgebildet, so dass sein Kolben bei einem Druckabfall die Kupplung schließend zu seiner Ausgangsposition zurück bewegt.

Zur Betätigung von druckmittelbetätigbaren Kupplungsaktuatoren werden üblicherweise elektromagnetische Schaltventile genutzt, die von einem Steuerungsgerät auf der Grundlage von Sensorinformationen und Steuerungprogrammen ansteuerbar sind. Diese Schaltventile schaffen je nach Schaltstellung für den wenigstens einen Druckraum des Kupplungsstellzylinders eine Druckmittelverbindung zu einer druckführenden Leitung, schließen diesen Zylinderraum nach außen ab oder ermöglichen ein Entleeren desselben in einen Druckmitteltank. Durch diese Steuerungsfunktionen wird der Kolben des Kupplungsstellzylinders axial verschoben oder in einer bestimmten Stellung gehalten, so dass die Anfahr- und Schaltkupplung geöffnet oder geschlossen ist, oder aber auch mit Schlupf betrieben werden kann.

Wie aus der DE 101 61 742 A1 bekannt ist, werden beispielsweise bestimmte hydraulische, elektrohydraulische oder elektrische Komponenten eines Kraftfahrzeugs, wie eben auch Schaltventile und Stellmotore, unter anderem aus Kostengründen nicht dauerfest ausgelegt, so dass zur Vermeidung von Schäden an solchen Bauteilen eine maximal zulässige Einschaltdauer innerhalb eines Bezugszeitraumes nicht überschritten werden darf.

Wenn nun beispielsweise ein Schaltventil für einen Kupplungsstellzylinder oder eine dieses Schaltventil mit dem Kupplungsstellzylinder verbindende Druckmittelleitung ein Leck aufweist, so muss dieses Schaltventil zum Öffnen der Kupplung in Abhängigkeit von der Größe der Leckage so lange betätigt werden, bis das Steuerungsgerät aufgrund von Sensorinformationen feststellt, dass die Kupplung im gewünschten Umfang geöffnet ist und daraufhin einen Schließbefehl bzw. keine weiteren Öffnungsbefehle mehr an dieses Schaltventil abgibt. Dies kann bei einer vergleichsweise großen Leckage dazu führen, dass das Schaltventil sehr lange betätigt wird, um die Kupplung offen zu halten. Eine derartig lange Betätigung kann schädlich für die Lebensdauer des Schaltventils sein und auch zu einem sofortigen Ausfall desselben führen. Zudem muss vermieden werden, dass beispielsweise bei eingelegtem Getriebegang und geöffneter Anfahr- und Schaltkupplung bei einer Leckage eine ungewollte Fahrsituation dadurch entsteht, dass die Kupplung leckagebedingt schließt.

Dieses Betriebsverhalten der Anfahr- und Schaltkupplung wird auch von solchen Kupplungsbetätigungsvorrichtungen gefordert, die nicht druckmittelbetatigbar sind und daher keine Schaltventile aufweisen. So muss beispielsweise für einen Kupplungsaktuator auf der Basis eines elektromotorisch angetriebenen und nicht selbsthemmend ausgelegten Spindeltrieb gewährleistet sein, dass bei einem Bauteilversagen oder bei einer kurzzeitigen Unterbrechung der elektrischen Spannungsversorgung, beispielsweise aufgrund eines Wackelkontaktes, keine Fahrsituation derart entsteht, dass die Anfahr- und Schaltkupplung bei eingelegtem Getriebegang ungewollt schließt.

Vor diesem Hintergrund liegt der Erfindung die Aufgabe zugrunde, ein Verfahren und eine Vorrichtung vorzustellen, mit denen die oben genannte Problematik gelöst werden kann. Insbesondere soll verhindert werden, dass bei einem Leck in einer zu einem hinsichtlich seiner Betätigungsbewegung nicht selbsthemmend ausgelegten Kupplungsaktuator führenden Druckleitung oder in diesem selbst oder in einem diesbezüglichen Kupplungsschaltventil letzteres wegen einer gegebenenfalls notwenigen Dauerbetätigung ausfällt und die Kupplung ungewollt schließt. Sofern der nicht selbsthemmend ausgelegte Kupplungsaktuator elektrisch betätigbar ausgebildet ist, soll bei einem Bauteilversagen des Antriebs oder bei einem Ausfall der elektrischen Spannungsversorgung keine Fahrsituation derart entstehen, dass die Anfahr- und Schaltkupplung ungewollt schließt.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich diese Aufgabe dadurch lösen lässt, dass dann, wenn der genannte Störfall von einem Steuerungsgerät festgestellt wird, dieses durch Erzeugen und Versenden eines Schaltbefehls an einen Getriebe-Aktuator dafür sorgt, dass das Getriebe in seine Neutralstellung gebracht wird, in der kein Drehmoment über dasselbe übertragbar ist. Durch diese Maßnahme wird sicher erreicht, dass ein störfallbedingtes Schließen der Anfahr- und Schaltkupplung nicht zu einer ungewollten Fahrsituation führt.

Demnach betrifft die Erfindung gemäß den Merkmalen des Patentanspruchs 1 zunächst ein Verfahren zur Steuerung eines Antriebsstranges mit einer automatisiert schaltbaren Anfahr- und Schaltkupplung und einem automatisierten Schaltgetriebe, mit einem hinsichtlich seiner Betätigungsbewegung nicht selbsthemmend ausgebildeten Kupplungsaktuator, mit einem Gang-Aktuator zum Einlegen und Herausnehmen von Getriebegängen, sowie mit einem Steuerungsgerät, welches mit Hilfe von empfangenen Sensorinformationen und Steuerungsprogrammen Stellbefehle für den Kupplungsaktuator sowie den Gang-Aktuator erzeugt und diesen Aktuatoren zuleitet. Zur Lösung der gestellten Aufgabe sind folgende Verfahrensschritte vorgesehen:
a) Bei eingelegtem Getriebegang Erzeugen und Versenden eines Steuerungsbefehls an wenigstens ein Betätigungsmittel für den Kupplungsaktuator zum Öffnen der Kupplung.
b) Bestimmen der Geschwindigkeit des Fahrzeugs.
c) Wenn die Fahrgeschwindigkeit gleich oder angenähert Null beträgt und der

Beginn eines ungewollten Schließens der Kupplung festgestellt wird, Erzeugen und Versenden eines Steuerungsbefehls an wenigstens ein Betätigungsmittel des Gang-Aktuators zur Durchführung einer Schaltung des Getriebes in seine Neutralstellung.

Durch diese Maßnahmen wird sicher dafür gesorgt, dass etwa bei kurzzeitigen Unterbrechungen in der elektrischen Spannungsversorgung für einen elektromechanischen Kupplungsaktuator oder beispielsweise bei einer Leckage in einer zu einem druckmittelbetätigbaren Kupplungsaktuator führenden Druckmittelleitung ein ungewolltes Schließen der Anfahr- und Schaltkupplung nicht zu einer ungewollten Betriebssituation des Fahrzeugs, etwa ein ungewolltes Anfahren desselben, führt. Zudem wird durch dieses Betriebsverhalten erreicht, dass das Betätigungsmittel für den Kupplungsaktuator keinen Schaden durch eine sonst unzulässig lange Betriebsdauer nimmt.

Gemäß den erfidungsgemäßen. Verfahren ist vorgesehen, dass ein ungewolltes Schließen der Kupplung wegen einer nicht ordnungsgemäßen Funktion des Betätigungsmittels für den Kupplungsaktuator und/oder des Kupplungsaktuators selbst und/oder einer Leckage durch die Bestimmung der Betätigungsdauer dieses Betätigungsmittels ermittelt wird.

Zudem kann in diesem Zusammenhang vorgesehen sein, dass die ermittelte Betätigungsdauer des Betätigungsmittels für den Kupplungsaktuator mit einem vorbestimmten Maximalwert für dessen Betätigungsdauer verglichen wird, und dass bei einem Überschreiten dieses Maximalwertes auf eine Fehlfunktion des Betätigungsmittels und/oder des Kupplungsaktuators und/oder eine Leckage in einer mit dem Kupplungsaktuator verbundenen Druckleitung oder in dem Kupplungsaktuator selbst geschlossen wird. Unter einer Fehlfunktion des Betätigungsmittels für den Kupplungsaktuator wird auch eine Störung in der Spannungsversorgung eines Elektromotors für einen elektromechanischen oder elektromagnetischen Kupplungsaktuator verstanden.

Gemäß einem weiteren Aspekt der Erfindung wird der genannte Verfahrensschritt (c) erst dann durchgeführt, wenn innerhalb eines vorgegebenen Zeitraumes eine maximale Betätigungsdauer des Betätigungsmittels für den Kupplungsaktuator zum Öffnen der Kupplung überschritten ist.

Zur Bestimmung der Betätigungsdauer des Betätigungsmittels kann dessen Einschaltzeit gemessen oder geschätzt bzw. deren Einschaltzeitintervalle aufsummiert werden. Geeignete Verfahren dazu sind aus der DE 101 61 742 A1 bekannt.

Insbesondere kann in diesem Zusammenhang vorgesehen sein, dass die Betätigungsdauer eines elektrohydraulischen oder elektropneumatisches Schaltventils gemessen wird, über das der Kupplungsaktuator mit einem die Kupplung öffnenden Druckmitteldruck versorgbar ist.

Für den Fall, dass der Kupplungsaktuator als Elektromotor ausgebildet ist, der beispielsweise eine Stellspindel eines elektromechanischen Kupplungsaktuators antreibt, kann vorgesehen sein, dass die Betätigungsdauer dieses Elektromotors bestimmt wird.

Die Erfindung betrifft auch eine Vorrichtung zur Steuerung eines Antriebsstranges mit einer automatisiert schaltbaren Anfahr- und Schaltkupplung und einem automatisierten Schaltgetriebe, mit einem hinsichtlich seiner Betätigungsbewegung nicht selbsthemmend ausgebildeten Kupplungsaktuator, einem Gang-Aktuator zum Einlegen und Herausnehmen von Getriebegängen, sowie mit einem Steuerungsgerät, welches mit Hilfe von empfangenen Sensorinformationen und Steuerungsprogrammen Stellbefehle für den wenigstens einen Kupplungsaktuator und den Gang-Aktuator erzeugt und diesen Aktuatoren zuleitet.

Gemäß der Erfindung umfasst diese Vorrichtung zudem ein Mittel zur Bestimmung der Fahrzeuggeschwindigkeit und wenigstens ein Mittel zum Bestimmen des Beginns einer ungewollten Schließbewegung des Kupplungsaktuators bei eingelegtem Getriebegang, wobei die genannten Mittel derart mit dem Steuerungsgerät zusammenwirkend ausgebildet sind, dass dieses Steuerungsgerät bei einer Fahrgeschwindigkeit von Null oder beinahe Null auf ein Betätigungsmittel für den Gang-Aktuator steuernd so einwirken kann, dass das Getriebe in seine Neutralstellung schaltbar ist.

Nach einer Weiterbildung dieser Vorrichtung ist vorgesehen, dass das wenigstens eine Mittel zum Bestimmen des Beginns einer ungewollten Schließbewegung des Kupplungsaktuators als Einschaltzeit-Bestimmungsvorrichtung ausgebildet ist.

Nachfolgend wird die Erfindung anhand eines Ausführungsbeispiels und einer Zeichnung weiter erläutert.

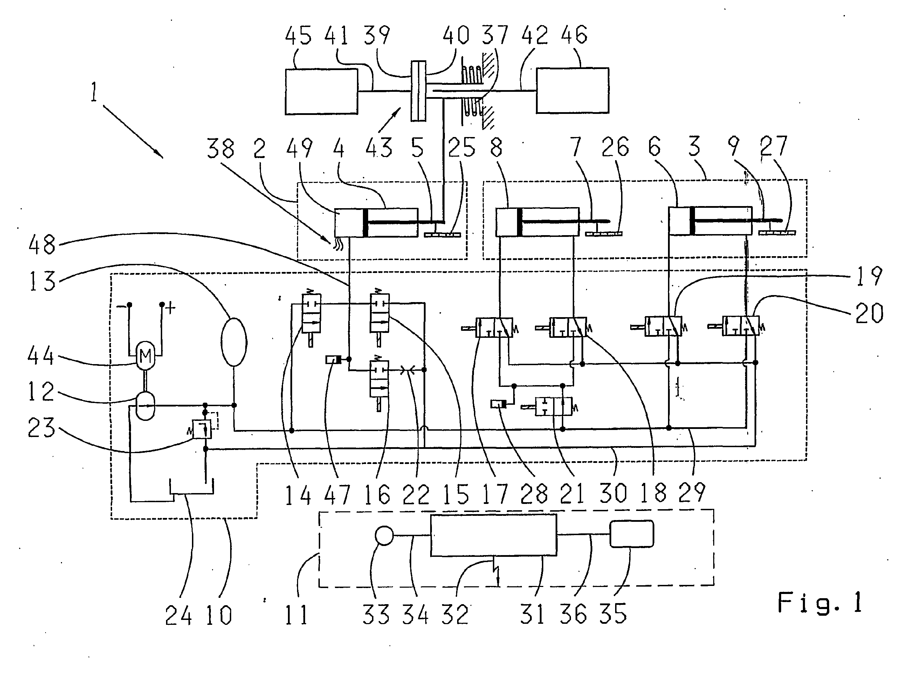

Die einzige Figur zeigt oben einen Antriebsstrang eines Kraftfahrzeuges mit einer Brennkraftmaschine 45, einer automatisch betätigbaren Anfahr- und Schaltkupplung 43 und ein automatisiertes Schaltgetriebe 46. Bei diesem bekannten Aufbau ist die Kurbelwelle 41 der Brennkraftmaschine 45 mit der Eingangsseite 39 der Kupplung 43 drehfest verbunden, während die Ausgangsseite 40 der Kupplung 43 drehfest mit der Getriebeeingangswelle 42 des automatisierten Schaltgetriebes 46 verbunden ist. Zudem ist die Ausgangsseite 40 dieser Kupplung axial gegen deren Eingangsseite 39 bewegbar ausgebildet, wobei eine Kupplungsschließfeder 37 die Kupplung 43 betätigungslos schließt. Zudem wirkt auf die Ausgangsseite 40 der Kupplung 43 ein Kupplungsaktuator 4, mit dessen Hilfe die Kupplung 43 gegen die Rückstellkraft der Kupplungsschließfeder 37 geöffnet werden kann.

Außerdem zeigt die einzige Figur ein Steuerungsschema 1 einer hydraulischen Steuerungsvorrichtung gemäß der Erfindung für die oben genannte Anfahr- und Schließkupplung 43 und für das automatisierte Schaltgetriebe 46, welches in vier Funktionsblöcke aufgeteilt ist.

Der erste Funktionsblock 2 wird durch den bereits erwähnten Aktuator 4 für die Anfahr- und Schaltkupplung 43 gebildet. Dieser Aktuator ist hier als einfach wirkender und nicht selbsthemmend ausgebildeter hydraulischer Kupplungsstellzylinder 4 ausgebildet, dessen Kolben 5 gegen die Rückstellkraft der Kupplungsschließfeder 37 wirken kann. Diese Kupplungsschließfeder 37 sorgt dafür, dass die Kupplung 43 in an sich bekannter Weise im nicht betätigten Zustand geschlossen ist. Die Kolbenstange 5 dieses Kupplungsaktuators 4 ist bei einer konkreten Einbausituation in einem Kraftfahrzeug mit einer hier nicht dargestellten Ausrückgabel einer Kupplungsausrückvorrichtung wirkverbunden.

Der Stellweg der Kolbenstange 5 wird von einem Wegsensor 25 erfasst und einem Steuerungsgerät 31 zugeleitet, so dass die Stellbewegung der Kolbenstange 5 gezielt gesteuert oder geregelt werden kann. Das Steuerungsgerät 31 steht über Sensor- bzw. Steuerungsstrecken 32 mit den relevanten Sensoren und Aktuatoren in Signalverbindung.

Der zweite Funktionsblock 3 dieses Steuerungsschemas 1 wird durch zwei zweifach wirkende hydraulische Aktuatoren für die Getriebebetätigung gebildet. Ein Getriebeaktuator ist hier als Gassen-Stellzylinder 6 ausgebildet, dessen Kolben zwei Druckräume innerhalb des Stellzylinders 6 druckdicht voneinander trennt. Die aus dem Stellzylinder 6 herausgeführte Kolbenstange 9 ist mit einer Getriebebetätigungsvorrichtung verbunden und dient zur gezielten Anwahl von Schaltgassen. Ein Wegsensor 27 teilt dabei dem Steuerungsgerät 31 die genaue Stellposition der Kolbenstange 9 mit.

Der zweite hydraulische Getriebeaktuator 8 ist ebenso aufgebaut wie der erste Getriebeaktuator 6, jedoch dient dieser zum Ein- und Auslegen von Getriebegängen. Dazu ist dessen Kolbenstange 7 mit einer diesbezüglichen Getriebebetätigungsvorrichtung verbunden. Die Stellposition dieser Kolbenstange 7 wird durch einen Wegsensor 26 erfasst und dem Steuerungsgerät 31 zugeführt.

Der dritte Funktionsblock 10 des Steuerungsschemas 1 umfasst die hydraulische Steuerung der genanten Stellzylinder 4, 6 und 8 für die Kupplung 43 und das Getriebe 46. Auf deren Aufbau und Wirkungsweise wird weiter unten eingegangen.

Der vierte Funktionsblock 11 wird durch das Steuerungsgerät 31 sowie weiterer Komponenten gebildet. Zu diesen gehört ein Geschwindigkeitssensor 33, der über eine Sensorleitung 34 mit dem Steuerungsgerät 31 verbunden ist und zur Erfassung der Fahrzeuggeschwindigkeit dient. Zudem zeigt die Figur eine Einschaltzeit-Bestimmungsvorrichtung 35, welche über eine Datenleitung 36 mit dem Steuerungsgerät 31 in Verbindung steht. Diese Einschaltzeit-Bestimmungsvorrichtung 35 kann aber auch integraler Bestandteil des Steuerungsgerätes 31 sein und derart betrieben werden, wie aus der eingangs genannten DE 101 61 742 A1 bekannt. Die durch ein Blitz-Symbol angedeuteten Steuerungs- und Sensorleitungen 32 führen zu den jeweiligen Sensoren und Schaltventilen, es sind aber auch drahtlose Signalübertragungsstrecken möglich.

Die hydraulische Steuerung gemäß Funktionsblock 10 umfasst zunächst an sich bekannte Druckerzeugungs-, Druckspeicher- und Druckmiitelleitungsbauteile. Zu diesen gehört ein Elektromotor 44, welcher eine Druckmittelpumpe 12 antreibt, ein Druckspeicher 13, zu den Stellzylindern 4, 6 und 8 führende Druckleitungen 29 sowie von diesen wegführende Drucklos- oder Entleerleitungen 30, ein Druckbegrenzungsventil 23 zwischen diesen beiden Leitungen 29 und 30 sowie ein Druckmitteltank 24, in welchen die Entleerleitung 29 mündet und aus dem die Pumpe 12 das Druckmittel ansaugt.

Dem Kupplungsstellzylinder 4 sind zur Durchführung der Betätigungsbewegung seines Kolbens drei elektromagnetische 2/2-Wegeventile 14, 15 und 16 zugeordnet. In der dargestellten Schaltstellung sind alle zugeordneten Schaltventile 14, 15 und 16 geschlossen, so dass aus einem vorherigen Ventil-Schaltvorgang ein bestimmtes Volumen Druckmittel unter einem bestimmten Druck in dem einzigen Druckraum 49 des Kupplungsstellzylinders 4 eingeschlossen ist. In diesem Fall ist die Kolbenstange 5 in einer Position dargestellt, bei der die Anfahr- und Schaltkupplung 43 geschlossen ist.

Zum Öffnen dieser Kupplung 43 wird das Schaltventil 14 in seine Geöffnet-Stellung gebracht, so dass weiteres Druckmittel über die Leitung 29 in den Druckraum 49 des Kupplungsstellzylinders 4 gelangen kann. Bei weiter geschlossenen Steuerventilen 15 und 16 bewegt sich daher der Kolben und die Kolbenstange 5 des Kupplungsstellzylinders 4 gegen die Kraft der Kupplungsschließfeder 37 nach rechts und öffnet die Kupplung 43. Nun wird das Schaltventil 14 wieder geschlossen, so dass der in dem Druckraum 49 des Kupplungsstellzylinders 4 eingeschlossene Druckmitteldruck die Kupplung weiter geöffnet hält.

Soll anschließend die Kupplung 43 wieder geschlossen werden, so wird das Schaltventil 14 weiter geschlossen gehalten und das Schaltventil 15 geöffnet. Dadurch kann das Druckmittel aus dem Druckraum 49 des Kupplungsstellzylinders 4 in die Entleerungsleitung 30 abfließen, wobei die Kupplungsschließfeder 37 die Rückstellbewegung des Kolbens bzw. der Kolbenstange 5 bewirkt.

Mit Hilfe des Schaltventils 16 und der diesem nachgeordneten Drossel 22 ist das Schließen der Anfahr- und Schaltkupplung 43 komfortabler als mit dem Schaltventil 15 realisierbar. Es wird vorzugsweise zum Schließen der Kupplung bei Anfahrvorgängen genutzt.

Die den Stellzylindern 6 und 8 für das Getriebe zugeordneten Schaltventile 17 bis 20 sind als 3/2-Wegeventile ausgebildet, die aufgrund von Steuerungsbefehlen des Steuerungsgeräts 31 ebenfalls elektromagnetisch betätigbar sind. Mit diesen Ventilen 17 bis 20 werden die beiden Druckräume der jeweiligen Stellzylinder 6, 8 alternativ mit der Druckleitung 29 oder der Entleerleitung 30 verbunden.

Ein weiteres elektromagnetisch betätigbares 2/2-Wegeventil 21 sorgt mit seinen beiden möglichen Schaltstellungen in Verbindung mit einem Drucksensor 28 dafür, dass bei entsprechenden Schaltstellungen der Schaltventile 17, 18 und 21 der Druckmitteldruck im rechten bzw. im linken Druckraum des Gang-Stellzylinders 8 oder in der Druckleitung 29 messbar ist, und dass der Druckmitteldruck in einen der beiden Druckräume des Gang-Stellzylinders 8 eingeschlossen werden kann.

Bei einer solchen oder ähnlichen Steuerungsvorrichtung kann es im Bereich der Kupplungssteuerung zu einer Störung des normalen Betriebsablaufes kommen, wenn eine Leckage 38 an dem Kupplungsbetätigungszylinder 4 oder in seiner Zuleitung auftritt. Sofern diese Leckage 38 einen bestimmten Volumenstrom pro Zeiteinheit überschreitet, führt dies beim Öffnen der Kupplung 43 dazu, dass bei geschlossenen Ventilen 15 und 16 sowie geöffnetem Ventil 14 zwar Druckmittel in den Druckraum 49 des Kupplungsstellzylinders 4 gelangt, gleichzeitig aber die für den Normalbetrieb des Schaltventils 14 ausreichend Öffnungsdauer bzw. Summe von Teilöffnungsdauern nicht genügt, um den Druckmittelabfluss über die Leckagestelle 38 zu kompensieren.

Wenn nun die Betriebssituation auftritt, dass das Fahrzeug stillsteht und ein Getriebegang eingelegt ist, muss auf jeden Fall gewährleistet sein, dass eine geöffnete Kupplung 43 auch geöffnet bleibt, weil das Fahrzeug andernfalls selbsttätig anfahren würde, ohne dass dies von dem Fahrzeugführer gewünscht ist oder erwartet wird. Das Steuerungsgerät 31 würde in einem solchen Fall das Schaltventil 14 daher weiter öffnend betätigen, welches jedoch zu einer Überhitzung und einer anschließenden Zerstörung desselben führen könnte.

Um dies zu vermeiden, sieht das Verfahren gemäß der Erfindung in einer Variante vor, dass die aktuelle Einschaltdauer des Schaltventils 14 bestimmt wird, dass diese Einschaltdauer mit einem abgespeicherten Maximalwert für diesen Einschaltdauerwert verglichen wird, und dass dann, wenn dieser Maximalwert überschritten wird, das Getriebe 46 in seine Neutralstellung gebracht wird. Durch diese Vorgehendweise wird einerseits sichergestellt, dass das Schaltventil 14 für die Zufuhr von Druckmittel zum Kupplungsstellzylinder 4 keinen Schaden nimmt, andererseits aber auch sicher verhindert wird, dass das Fahrzeug wegen eines leckagebedingten Schließens der Anfahr- und Schaltkupplung 43 ungewollt anfährt.

Wie die einzige Figur weiter zeigt, kann die genannte Steuerungsfunktion auch ausgelöst werden, wenn mittel eines Drucksensors 47 in der zu dem Kupplungsstellzylinder 4 führenden Leitung 48 der Druck gemessen wird. Sofern dieser Druck bei geschlossenen Schaltventilen 14, 15 und 16 unter einen vorgegebenen Soll-Wert abfällt, kann davon ausgegangen werden, dass sich die Kupplung ungewollt schließt, beispielsweise aufgrund der Leckage 38. Dies wird dann für das Steuerungsgerät 31 zum Anlass genommen, das Getriebe 46 wie beschrieben in seine Neutralstellung zu bringen.

Um dieses Steuerungsverhalten zu erreichen, wird der Gang-Stellzylinder durch Betätigen zumindest eines der Schaltventile 17 und/oder 18 in eine solche Betätigungsstellung (Neutral) gebracht, dass über das Getriebe keine Drehmomentübertragung mehr stattfinden kann.

Die Erfindung ist nicht auf Steuerungsvorrichtungen mit druckmittelbetätigbaren Kupplungsaktuatoren beschränkt, sondern erfasst alle solche Steuerungsvorrichtungen, bei denen der Kupplungsaktuator hinsichtlich seiner Stellbewegung nicht selbsthemmend ausgebildet ist. Ein solcher Kupplungsaktuator könnte daher beispielsweise ein nicht selbsthemmend ausgebildeter elektromotorischer Spindeltrieb sein, bei dem bei einem Wegfall oder einer kurzzeitigen Unterbrechung der Spannungsvorsorgung für seinen elektrischen Abtriebsmotor eine Rückstellung der Kupplung 43 durch deren Kupplungsschließfeder 37 in Richtung zu ihrer Schließ-Position zu befürchten wäre.

Auch bei solchen elektromotorischen oder auch bei elektromagnetischen Kupplungsaktuatoren führt die Anwendung des Verfahrens gemäß der Erfindung zu einem gewünschten Betriebsverhalten, bei dem die elektrische oder elektromagnetische Kupplungsbetätigungsvorrichtung keinen Schaden nimmt, und gleichzeitig sichergestellt ist, dass das Fahrzeug nicht selbsttätig anfährt. Erreicht wird dies dadurch, dass das Getriebe in Neutral geschaltet wird, wenn die genannte Fehlfunktion eines für das Offenhalten der Kupplung wichtigen Bauteils zu befürchten ist oder bereits festgestellt wurde.

### Bezugszeichen

- 1: Steuerungsschema Kupplung und Getriebe
- 2: Block Kupplungsbetätigung
- 3: Block Getriebebetätigung
- 4: Kupplungsstellzylinder, Kupplungsaktuator
- 5: Kolbenstange
- 6: Gassen-Stellzylinder, Gassen-Aktuator
- 7: Kolbenstange
- 8: Gang-Stellzylinder, Gang-Aktuator
- 9: Kolbenstange
- 10: Block hydraulische Steuerungsvorrichtung
- 11: Block elektronische Steuerungsvorrichtung
- 12: Pumpe
- 13: Druckbehälter
- 14: erstes 2/2-Wegeventil, Kupplung
- 15: zweites 2/2-Wegeventil, Kupplung
- 16: drittes 2/2-Wegeventil, Kupplung
- 17: erstes 3/2-Wegeventil Stellzylinder, Gang
- 18: zweites 3/2-Wegeventil Stellzylinder, Gang
- 19: drittes 3/2-Wegeventil Stellzylinder, Gasse
- 20: viertes 3/2-Wegeventil Stellzylinder, Gasse
- 21: 2/2-Wegeventil, Gang
- 22: Drossel
- 23: Druckbegrenzungsventil
- 24: Tank
- 25: Wegsensor, Kupplung
- 26: Wegsensor, Gang
- 27: Wegsensor, Gasse
- 28: Drucksensor
- 29: Druckleitung
- 30: Entleerleitung
- 31: Steuerungsgerät
- 32: Steuerungs- und Sensorleitungen
- 33: Geschwindigkeitssensor
- 34: Sensorleitung
- 35: Einschaltzeit-Bestimmungsvorrichtung
- 36: Datenleitung
- 37: Kupplungsschließfeder
- 38: Leckage, Leckagestelle
- 39: Eingangsseite der Kupplung
- 40: Ausgangsseite der Kupplung
- 41: Kurbelwelle
- 42: Getriebeeingangswelle
- 43: Kupplung, Anfahr- und Schaltkupplung
- 44: Elektromotor
- 45: Brennkraftmaschine
- 46: Automatisiertes Schaltgetriebe
- 47: Drucksensor
- 48: Druckleitung
- 49: Druckraum

## Patentansprüche

1. Verfahren zur Steuerung eines Antriebsstranges mit einer automatisiert schaltbaren Anfahr- und Schaltkupplung (43) und einem automatisierten Schaltgetriebe (46), mit einem hinsichtlich seiner Betätigungsbewegung nicht selbsthemmend ausgebildeten Kupplungsaktuator (4), mit einem Gang-Aktuator (8) zum Einlegen und Herausnehmen von Getriebegängen, sowie mit einem Steuerungsgerät (31), welches mit Hilfe von empfangenen Sensorinformationen und Steuerungsprogrammen Stellbefehle für den Kupplungsaktuator (4) und den Gang-Aktuator (8) erzeugt und diesen Aktuatoren zuleitet, wobei das Verfahren folgende Verfahrensschritte aufweist:
a) Bei eingelegtem Getriebegang Erzeugen und Versenden eines Steuerungsbefehls an wenigstens ein Betätigungsmittel (14) für den Kupplungsaktuator (4) zum Öffnen der Kupplung (43).
b) Bestimmen der Geschwindigkeit des Fahrzeugs.
c) Wenn die Fahrgeschwindigkeit gleich oder angenähert Null beträgt und der Beginn eines ungewollten Schließens der Kupplung (43) festgestellt wird, Erzeugen und Versenden eines Steuerungsbefehls an wenigstens ein Betätigungsmittel (17, 18) des Gang-Aktuators (8) zur Durchführung einer Schaltung des Getriebes (46) in seine Neutralstellung,
**dadurch gekennzeichnet, dass** das ungewollte Schließen der Kupplung (43) wegen einer nicht ordnungsgemäßen Funktion des Betätigungsmittels (14) für den Kupplungsaktuator (4) und/oder des Kupplungsaktuators selbst und/oder einer Leckage (38) ermittelt wird durch die Bestimmung der Betätigungsdauer dieses Betätigungsmittels (14).

2. Verfahren nach Anspruch 1, **dadurch gekennzeichnet, dass** die ermittelte Betätigungsdauer des Betätigungsmittels (14) mit einem vorbestimmten Maximalwert für die Betätigungsdauer verglichen wird, und dass bei einem Überschreiten dieses Maximalwertes auf eine Fehlfunktion des Betätigungsmittels (14) und/oder des Kupplungsaktuators (4) und/oder eine Leckage (38) in einer mit dem Kupplungsaktuator (4) verbundenen Druckleitung (48) oder in dem Kupplungsaktuator (4) selbst geschlossen wird.

3. Verfahren nach wenigstens einem der Ansprüche 1 bis 2, **dadurch gekennzeichnet, dass** der Verfahrensschritt (c) durchgeführt wird, wenn innerhalb eines vorgegebenen Zeitraumes eine maximale Betätigungsdauer des Betätigungsmittels (14) für den Kupplungsaktuator (4) zum Öffnen der Kupplung (43) überschritten ist.

4. Verfahren nach wenigstens einem der vorherigen Ansprüche, **dadurch gekennzeichnet, dass** zur Bestimmung der Betätigungsdauer des Betätigungsmittels (14) dessen Einschaltzeit gemessen oder geschätzt bzw. deren Einschaltzeitintervalle aufsummiert werden.

5. Verfahren nach wenigstens einem der vorherigen Ansprüche, **dadurch gekennzeichnet, dass** die Betätigungsdauer eines Schaltventils (14) für den Kupplungsaktuator (4) gemessen wird.

6. Verfahren nach wenigstens einem der vorherigen Ansprüche, **dadurch gekennzeichnet, dass** die Betätigungsdauer eines Elektromotors eines elektromechanischen oder elektromagnetischen Kupplungsaktuators (4) gemessen wird.

7. Vorrichtung zur Steuerung eines Antriebsstranges mit einer automatisiert schaltbaren Anfahr- und Schaltkupplung (43) und einem automatisierten Schaltgetriebe (46), mit einem hinsichtlich seiner Betätigungsbewegung nicht selbsthemmend ausgebildeten Kupplungsaktuator (4), mit einem Gang-Aktuator (8) zum Einlegen und Herausnehmen von Getriebegängen, sowie mit einem Steuerungsgerät (31), welches mit Hilfe von empfangenen Sensorinformationen und Steuerungsprogrammen Stellbefehle für den Kupplungsaktuator (4) und den Gang-Aktuator (8) erzeugt und diesen Aktuatoren zuleitet, mit einem Mittel (33) zur Bestimmung der Fahrzeuggeschwindigkeit, und wenigstens ein Mittel (25, 35, 47) zum Bestimmen des Beginns einer ungewollten Schließbewegung des Kupplungsaktuators (4) bei eingelegtem Getriebegang, wobei diese Mittel (25, 33, 35, 47) derart mit dem Steuerungsgerät (31) zusammenwirkend ausgebildet sind, dass dieses Steuerungsgerät (31) bei einer Fahrgeschwindigkeit von oder beinahe Null auf ein Betätigungsmittel (17, 18) für den Gang-Aktuator (8) steuernd so einwirken kann, dass das Getriebe (46) in seine Neutralstellung schaltbar ist, **dadurch gekennzeichnet, dass** das Mittel (25, 35, 47) zum Bestimmen des Beginns einer ungewollten Schließbewegung des Kupplungsaktuators (4) als Einschaltzeit-Bestimmungsvorrichtung (35) ausgebildet ist.

8. Vorrichtung nach Anspruch 7, **dadurch gekennzeichnet, dass** das Betätigungsmittel für den Kupplungsaktuator (4) als wenigstens ein elektromechanisches Schaltventil (14) oder als Elektromotor ausgebildet ist.

## Claims

1. Method for controlling a drivetrain having an automatically switchable starting and shift clutch (43) and having an automatic shift transmission (46), having a clutch actuator (4) which is of non-self-locking design with regard to its actuating movement, having a gear actuator (8) for engaging and disengaging transmission gears, and having a control unit (31) which, by means of received sensor information and control programmes, generates control commands for the clutch actuator (4) and the gear actuator (8) and transmits said control commands to said actuators, with the method having the following method steps:
a) when a transmission gear is engaged, generating and transmitting a control command to at least one activation means (14) for the clutch actuator (4) to open the clutch (43),
b) determining the speed of the vehicle,
c) if the driving speed is equal to or approximately zero and the start of an undesired closure of the clutch (43) is detected, generating and transmitting a control command to at least one activation means (17, 18) of the gear actuator (8) to carry out a shift of the transmission (46) into its neutral position,
**characterized in that** the undesired closure of the clutch (43) on account of an incorrect function of the activation means (14) for the clutch actuator (4) and/or of the clutch actuator itself and/or on account of a leakage (38) is detected by determining the activation duration of said activation means (14).

2. Method according to Claim 1, **characterized in that** the determined activation duration of the activation means (14) is compared with a predetermined maximum value for the activation duration, and **in that** a malfunction of the activation means (14) and/or of the clutch actuator (4) and/or a leakage (38) in a pressure line (48) which is connected to the clutch actuator (4) or in the clutch actuator (4) itself is inferred if said maximum value is exceeded.

3. Method according to at least one of Claims 1 to 2, **characterized in that** the method step (c) is carried out if, within a predefined time period, a maximum activation duration of the activation means (14) for the clutch actuator (4) for opening the clutch (43) is exceeded.

4. Method according to at least one of the preceding claims, **characterized in that**, to determine the activation duration of the activation means (14), the activation time thereof is measured or estimated, or the activation time intervals thereof are added up.

5. Method according to at least one of the preceding claims, **characterized in that** the activation duration of a switching valve (14) for the clutch actuator (4) is measured.

6. Method according to at least one of the preceding claims, **characterized in that** the activation duration of an electric motor of an electromechanical or electromagnetic clutch actuator (4) is measured.

7. Device for controlling a drivetrain having an automatically switchable starting and shift clutch (43) and having an automatic shift transmission (46), having a clutch actuator (4) which is of non-self-locking design with regard to its actuating movement, having a gear actuator (8) for engaging and disengaging transmission gears, and having a control unit (31) which, by means of received sensor information and control programmes, generates control commands for the clutch actuator (4) and the gear actuator (8) and transmits said control commands to said actuators, having a means (33) for determining the vehicle speed, and at least one means (25, 35, 47) for determining the start of an undesired closing movement of the clutch actuator (4) when a transmission gear is engaged, with said means (25, 33, 35, 47) being designed to interact with the control unit (31) in such a way that, at a driving speed of zero or approximately zero, said control unit (31) can exert a controlling action on an activation means (17, 18) for the gear actuator (8) in such a way that the transmission (46) can be shifted into its neutral position, **characterized in that** the means (25, 35, 47) for determining the start of an undesired closing movement of the clutch actuator (4) is designed as an activation time determining device (35).

8. Device according to Claim 7, **characterized in that** the activation means for the clutch actuator (4) is designed as at least one electromechanical switching valve (14) or as an electric motor.

## Revendications

1. Procédé pour commander une chaîne cinématique avec un embrayage de démarrage et de changement de vitesse (43) commutable et une boîte de vitesses automatisée (46), avec un actionneur d'embrayage (4) réalisé de manière non autobloquante en ce qui concerne son mouvement d'actionnement, avec un actionneur de vitesses (8) pour enclencher et désenclencher des vitesses de transmission, ainsi qu'avec un appareil de commande (31) qui produit, à l'aide d'informations de capteurs reçues et de programmes de commande, des ordres de réglage pour l'actionneur d'embrayage (4) et l'actionneur de vitesses (8), et les achemine à ces actionneurs, le procédé présentant les étapes de procédé suivantes :
a) lorsque la vitesse de transmission est enclenchée, produire et envoyer un ordre de commande à au moins un moyen d'actionnement (14) pour l'actionnement d'embrayage (4) pour ouvrir l'embrayage (43) ;
b) déterminer la vitesse du véhicule ;
c) si la vitesse de conduite est nulle ou pratiquement nulle, et que le début d'une fermeture indésirable de l'embrayage (43) est constaté, produire et envoyer un ordre de commande à au moins un moyen d'actionnement (17, 18) de l'actionneur de vitesses (8) pour effectuer une commutation de la boîte de vitesses (46) dans sa position neutre,
**caractérisé en ce que** la fermeture indésirable de l'embrayage (43) due à un mauvais fonctionnement du moyen d'actionnement (14) pour l'actionneur d'embrayage (4) et/ou de l'actionneur d'embrayage lui-même et/ou due à une fuite (38) est déterminée en déterminant la durée d'actionnement de ce moyen d'actionnement (14).

2. Procédé selon la revendication 1, **caractérisé en ce que** la durée d'actionnement déterminée du moyen d'actionnement (14) est comparée avec une valeur maximale prédéterminée pour la durée d'actionnement, et **en ce que** dans le cas d'un dépassement de cette valeur maximale, on en conclut un mauvais fonctionnement du moyen d'actionnement (14) et/ou de l'actionneur d'embrayage (4) et/ou une fuite (38) dans une conduite de pression (48) connectée à l'actionneur d'embrayage (4) ou dans l'actionneur d'embrayage (4) lui-même.

3. Procédé selon au moins l'une quelconque des revendications 1 et 2, **caractérisé en ce que** l'étape de procédé (c) est effectuée lorsqu'une durée d'actionnement maximale du moyen d'actionnement (14) pour l'actionneur d'embrayage (4) pour l'ouverture de l'embrayage (43) est dépassée en l'espace d'un intervalle de temps prédéfini.

4. Procédé selon au moins l'une quelconque des revendications précédentes, **caractérisé en ce que** pour déterminer la durée d'actionnement du moyen d'actionnement (14), son temps d'enclenchement est mesuré ou estimé ou ses intervalles de temps d'enclenchement sont additionnés.

5. Procédé selon au moins l'une quelconque des revendications précédentes, **caractérisé en ce que** la durée d'actionnement d'une soupape de commutation (14) pour l'actionneur d'embrayage (4) est mesurée.

6. Procédé selon au moins l'une quelconque des revendications précédentes, **caractérisé en ce que** la durée d'actionnement d'un moteur électrique d'un actionneur d'embrayage (4) électromécanique ou électromagnétique est mesurée.

7. Dispositif pour commander une chaîne cinématique avec un embrayage de démarrage et de changement de vitesse (43) commutable et une boîte de vitesses automatisée (46), avec un actionneur d'embrayage (4) réalisé de manière non autobloquante en ce qui concerne son mouvement d'actionnement, avec un actionneur de vitesses (8) pour enclencher et désenclencher des vitesses de transmission, ainsi qu'avec un appareil de commande (31) qui produit, à l'aide d'informations de capteurs reçues et de programmes de commande, des ordres de réglage pour l'actionneur d'embrayage (4) et l'actionneur de vitesses (8), et les achemine à ces actionneurs, avec un moyen (33) pour déterminer la vitesse du véhicule, et au moins un moyen (25, 35, 47) pour déterminer le début d'un mouvement de fermeture indésirable de l'actionneur d'embrayage (4) lorsque la vitesse de transmission est enclenchée, ces moyens (25, 33, 35, 47) étant réalisés de manière à coopérer avec l'appareil de commande (31) de telle sorte que cet appareil de commande (31), dans le cas d'une vitesse de conduite nulle ou pratiquement nulle, puisse agir en commandant un moyen d'actionnement (17, 18) pour l'actionneur d'embrayage (8), de telle sorte que la boîte de vitesses (46) puisse être commutée dans sa position neutre, **caractérisé en ce que** le moyen (25, 35, 47) pour déterminer le début d'un mouvement de fermeture indésirable de l'actionneur d'embrayage (4) est réalisé sous forme de dispositif pour déterminer un temps d'enclenchement (35).

8. Dispositif selon la revendication 7, **caractérisé en ce que** le moyen d'actionnement pour l'actionneur d'embrayage (4) est réalisé sous forme d'au moins une soupape de commutation électromécanique (14) ou sous forme de moteur électrique.
